**Europäisches Patentamt**

**European Patent Office**

**Office européen des brevets**

(19)

(11) Veröffentlichungsnummer: **0 173 150**
A2

# EUROPÄISCHE PATENTANMELDUNG

(12)

(21) Anmeldenummer: 85110051.1

(22) Anmeldetag: 09.08.85

(51) Int. Cl.⁴: **A 46 B 13/02**, A 46 B 7/06

(30) Priorität: **24.08.84 DE 3431225**

(43) Veröffentlichungstag der Anmeldung: **05.03.86** **Patentblatt 86/10**

(84) Benannte Vertragsstaaten: **AT BE CH DE FR GB IT LI NL SE**

(71) Anmelder: **Braun Aktiengesellschaft, Rüsselsheimer Strasse 22, D-6000 Frankfurt/Main (DE)**

(72) Erfinder: **Die Erfinder haben auf ihre Nennung verzichtet**

(74) Vertreter: **Einsele, Rolf, Braun Aktiengesellschaft Postfach 1120 Frankfurter Strasse 145, D-6242 Kronberg Taunus (DE)**

(54) **Elektrische Zahnbürste.**

(57) Die Erfindung betrifft eine elektrische Zahnbürste, die aus einem Griff besteht, in dessen Inneren ein Antrieb untergebracht ist, an den ein Bürstenstiel (1) mit seinem dem Bürstenkopf gegenüberliegenden Ende lösbar befestigt ist, wobei der Bürstenkopf eine Kreisbewegung beschreibt, deren Drehachse (4) radial zum Bürstenstiel (1) verläuft und der Bürstenkopf kippbar gelagert ist.

EP 0 173 150 A2

Die Erfindung betrifft eine elektrische Zahnbürste gemäß dem Oberbegriff des Patentanspruchs 1.

Aus der PCT/EP 83/00347 ist eine elektrische Zahnbürste bekannt, die einen Handgriff mit einem Antrieb und einen Bürstenstiel aufweist. An dem Bürstenstiel ist ein Borstenkopf ausgebildet, der um eine Drehachse drehbar gelagert ist, die senkrecht zu dem Bürstenstiel ausgerichtet ist. Nachteilig bei der bekannten Zahnbürste ist, daß der Borstenkopf nur schwierig in die Zahnzwischenräume eindringen kann.

Weiter ist aus der DE-OS 29 28 449 eine Zahnbürste bekannt, deren Bürstenkopf über eine Spiralfeder mit dem Stiel der Zahnbürste verbunden ist. Der Bürstenkopf kann mittels der Spiralfederaufhängung Verdreh- und Kippbewegungen bei dem Reinigungsvorgang der Zähne ausführen. Zwar ist es mit den Borstenrändern der bekannten Zahnbürste möglich in die Zahnzwischenräume einzudringen, weil sich der Zahnreinigungskopf entsprechend der Zahnoberflächenkontur neigen kann, jedoch besteht der Mangel dieser Zahnbürste darin, daß die Reinigungsbewegung durch die fortlaufende Rotation des Zahnreinigungskopfes nicht vorhanden ist. D.h., der Borstenkopf nach der DE-OS 29 28 449 läßt sich nicht voll und fortlaufend umdrehen.

Ferner ist aus der EP-A2 66 259 eine Zahnbürste bekannt, die einen Borstenkopf aufweist, der ähnlich einer Wippe kippbar gelagert ist. Die Drehachse des Borstenkopfes verläuft dabei quer zur Längsachse der Zahnbürste. Der Bürstenkopf kann infolge der wippenähnlichen Lagerung während den horizontalen Putzbewegungen vor- und zurückkippen und dabei etwas in die Zahnzwischenräume eindringen. Auch bei dieser Zahnbürste ist die rotierende Putzbewegung nicht vorhanden.

...

- 2 -

Ähnlich der Zahnbürste nach der EP-A2 66 259 ist eine Zahnbürste aus der EP-B1 23 407 und der FR-AS 25 50 068 bekannt, die deren Bürstenkopf auf einer Achse senkrecht zur Längsachse der Zahnbürste drehbar gelagert sind. Die Zahnbürste nach der FR-AS 25 50 068 weist zusätzlich einen Federstab auf, der den Bürstenkopf in eine bevorzugte Grundposition ausrichtet. Auch bei beiden letztgenannten Zahnbürsten ist die rotierende Putzbewegung nicht vorhanden.

Es ist deshalb Aufgabe der Erfindung, eine elektrischen Zahnbürste zu schaffen, deren Borstenkopf eine große Reinigungswirkung an allen gekrümmten Zahnoberflächenpartien, in den Zahnfleischtaschen, den Zahnfleischfurchen sowie den Zahnzwischenräumen aufweist.

Die Erfindung wird durch die Merkmale des kennzeichnenden Teils des Patentanspruhs 1 gelöst.

Gemäß der Erfindung wird eine elektrische Zahnbürste mit einem Bürstenoder Borstenkopf bzw. einem Zahnreinigungskopf geschaffen, der eine Gelenkvorrichtung aufweist, die neben der vollen und fortlaufenden Drehbewegung des Reinigungskopfes ein Kippen aus der Grundposition heraus zuläßt. D.h., zusätzlich zu der Drehbewegung besitzt der Reinigungskopf weitere Freiheitsgrade. Je nach der Ausführung der Gelenkvorrichtung sind ein oder zwei weitere Freiheitsgrade vorhanden, weshalb sich der Reinigungskopf bei den Putzbewegungen leicht allen Konturen und Zahnzwischenräumen selbsttätig anpassen kann. Somit ist der Reinigungskopf bei voller Drehzahl, bezogen auf die Längsachse schwenkbar, ohne daß die Zahnbürste bzw. deren Längsachse eine andere Richtungsorientierung erfahren muß. Wird die Zahnbürste mit dem Zahnreinigungskopf nach der Erfindung entlang den Zahnreihen geführt, schwenkt

...

der vordere Rand der Reinigungselemente - z.B. in Form eines Borstenkranzes oder von Gummikelchen - selbsttätig in den angrenzenden Zahnzwischenraum, weil die Andruckskräfte des Reinigungskopfes an den Zahnhälsen von außen wirkende Kräfte hervorrufen, die über eine Hebelwirkung den Borstenkranz zum Einschwenken in den Zahnzwischenraum bringen. Mit anderen Worten paßt sich die Lage des Reinigungskopfes aus einer Grundarbeitsposition heraus, an die unterschiedlichen Oberflächenkrümmungen der Zähne an. Durch die verbesserte Beweglichkeit des Reinigungskopfes wird die Reinigungswirkung zusätzlich zu der großen Putzwirkung durch die fortlaufende Rotation des Kopfes wesentlich erhöht.

Die Gelenkvorrichtung kann zwischen Drehachse und Zahnreinigungskopf ausgebildet sein, wobei in diesem Fall die Drehachse fest auf der Längsachse der Zahnbürste steht. Andererseits ist es möglich, die Gelenkvorrichtung zwischen Längsachse und Drehachse auszubilden und den Reinigungskopf auf der Drehachse vorzugsweise starr zu lagern. In allen Fällen wird die gleiche vorteilhafte Kippwirkung erzielt, d.h., alle Ausführungsformen der Gelenkanordnung liegen im Rahmen der Erfindung, in denen der Reinigungskopf selbst oder zusammen mit der Drehachse aus seiner Grundarbeitsposition heraus um einen bestimmten Winkelbereich gekippt werden kann. Der Zahnreinigungskopf oder der Bürstenkopf ist daher so gelagert, daß er bei inhomogener äußerer Krafteinwirkung bis zu einem maximalen Winkel von etwa 20 - 30° verschwenkbar ist. Im Ergebnis erhält man eine wesentlich verbesserte Reinigung des Gebißes, ohne daß es zusätzliche Anstrengungen des Benutzers bedürfte.

Als Frequenzbereich der Kreisbewegung, mit der der Bürstenkopf rotiert wird, werden 5 - 50 Hz, insbesondere jedoch 7 - 10 Hz vorgeschlagen. Bei einer höheren Frequenz tritt eine raschere

...

- 4 -

Verhärtung der Borsten ein und der Bürstenkopf ist bei hohen Geschwindigkeiten nicht mehr in der Lage sich den Zahnkonturen in ausreichendem Maße anzupassen. Bei niedrigeren Frequenzen hingegen wird der Antrieb unruhig und neigt zur Ausbildung von Unwuchten.

In einer besonders bevorzugten Ausführungsform ist der Bürstenkopf ein Kranzteller, der um seine Symmetrieachse rotiert. Der Begriff "Kranzteller" definiert im Rahmen der Erfindung ein tellerförmiges Gebilde, auf dem ein aus Reinigungsmitteln oder Reinigungelementen bestehender Kranz angebracht ist, wobei unter Reinigungsmittel neben Borsten auch die weiter unten näher erläuterten Gummikelche zu verstehen sind. Für diese Ausführungsform charakteristisch ist, daß sich der Kranzteller um seine Symmetrieachse dreht, also seinen Schwerpunkt beibehält, und die Kreisbewegung über die Eigenrotation realisiert.

Insbesondere können auf dem Teller senkrecht oder schräg nach außen weisende Borsten aufgebracht sein, wobei sich durch den letzteren Fall bei gleichem Tellerdurchmesser eine größere Wirkfläche ergibt. Gemäß einer weiteren Empfehlung der Erfindung ist der Kranzteller im Bereich der Drehachse frei von Borsten, wenn es nicht erwünscht ist, daß sich die mittleren Borstenbereiche während der Rotation in den Zahnzwischenräumen sammeln und konzentrieren. Mit dem Anpressen des Borstenkopfes an die Zähne biegen sich die äußeren Borsten nach außen und die inneren Borsten dringen tiefer in den Zahnzwischenraum ein. Wird ein vollkommen mit Borsten bestückter Borstenkopf verwendet, dienen die inneren Borsten bevorzugt zum Reinigen der Zahnzwischenräume, wobei die äußeren Borsten auf den Zahnfleischsaum einwirken. Andererseits wird mit den borstenfreien Mittelbereich eine Möglichkeit geschaffen, im drehachsennahen Bereich des Kranz-

...

tellers die Zahnpasta anzubringen, die sich während des Betriebes, also der Rotation des Kranztellers, gleichmäßig in peripheren Zonen verteilt.

Bei einer anderen realisierbaren Möglichkeit des Kranztellers wird ein sich nach außen öffnender Kegelstumpfmantel auf dem Teller angebracht, der des weiteren aus elastischem Material, wie z.B. Gummi, besteht. Erfahrungsgemäß erreicht man mit derartigen "Gummikelchen" eine bessere Reinigung als mit aus Borsten aufgebauten Köpfen. Die Öffnung des Kelches bietet sich zur Einbringung einer Zahnpasta an und diese wird durch den Anpressdruck während des Arbeitens, die eine Verbreiterung des Kegelstumpfmantels auf Grund seiner Elastizität zur Folge hat, gleichmäßig über die Zähne verteilt und in die Zahnzwischenräume eingepreßt. Eine Weiterbildung dieses Kranztellers besteht darin, den außen offenen Kegelstumpfmantel mit einer Membran zu verschließen auf der Borsten angebracht sind. Die Membran kann auf Grund ihrer eigenen Elastizität ihre Form und Gestalt verändern und sich auf diese Weise der Oberfläche der Zähne bzw. den Zahnzwischenräumen anpassen. Zusätzlich gestattet die Elastizität des die membrantragenden Gummikelches eine durch den Anpreßdruck veränderbare Öffnungsweite, so daß die vorgeschlagene Ausführungsform sowohl die Vorzüge des Gummikelches als auch des mit Borsten besetzten Kranztellers in sich vereint.

Auch bei Verwendung eines Kranztellers wird eine Frequenz von 5 - 50 Hz vorgeschlagen, wobei sich in den Bereichen 2 - 15 Hz aus den oben bereits dargelegten Gründen die besten Reinigungsresultate erreichen lassen. Die Erweiterung des Frequenzbereiches nach unten hat ihre Ursache darin, daß bei Verwendung eines Kranztellers der Schwerpunkt auch während der Arbeitsphase raumfest bleibt und die auftretenden Unwuchten deshalb wesentlich geringer als bei kreisförmiger Bewegung des Bürstenkopfes sind.

...

**BRAUN**    0173150

Braun Aktiengesellschaft

05244-PT4/Wei
24.07.85

Der den Übergang zwischen Zahn und Zahnfleisch definierende Zahnfleischsaum ist eine gekrümmte Linie, deren Mittelwert in etwa einem Kreis mit dem Durchmesser von ca. 1,5 cm entspricht. Eine bestmögliche Reinigung dieses Bereiches läßt sich dann erreichen, wenn die Kreisbewegungen des Bürstenkopfes so dimensioniert ist, daß sie einen Kreis mit dem Durchmesser 1,5 cm beschreibt, weil sich dann die Borsten im wesentlichen entlang des Zahnfleischsaumes bewegen und diesen auf optimale Weise reinigen.

In einer bevorzugten Ausgestaltung wird vorgeschlagen, die Zähne von beiden Seiten her, also von innen und außen gleichzeitig einem Reinigungsprozeß zu unterziehen, indem zwei Bürstenköpfe im Abstand zueinander und aufeinander zu weisend angebracht sind, wobei deren lichter Abstand geringer gewählt ist als die mittlere Dicke der Zähne. Die Borstenköpfe der Zahnbürste können hierbei in Form eines Gabelkopfes angeordnet sein. Einer der wesentlichen Vorteile ist darin zu sehen, daß die Reinigung aller Zähne etwa in der Hälfte der Zeit durchführbar ist.

Nach einer vorteilhaften Weiterbildung ist ein Federelement vorgesehen, das den Reinigungskopf nach Fortfall der äußeren Krafteinwirkung auf die Reinigungselemente wieder in die Grundarbeitsposition zurückbewegt. Der Benutzer kann dadurch in vorteilhafter Weise nach dem Absetzen des Reinigungskopfes von den Zähnen die Lage der Reinigungsfläche vorhersehen und den Reinigungskopf leicht an einer neuen Stelle richtig positionieren. Der Reinigungskopf führt so keine unkontrollierten Bewegungen aus, wenn die Reinigungselemente die Zähne nicht berühren. Die Federkonstante des Federelementes ist so bemessen, daß der Reinigungskopf im frei rotierenden Zustand eine definierte Lage einnimmt und andererseits die Kippbewegungen beim Bewegen über die Zahnoberfläche nicht behindert werden.

...

BRAÜN

Braun Aktiengesellschaft

- 7 -

05244-PT4/Wei
24.07.85

Die Erfindung wird nachfolgend anhand der Zeichnung näher erläutert. Es zeigen:

Fig. 1 einen an einem Bürstenstiel befestigten Kranzteller in Seitenansicht;

Fig. 2 die Ausführungsform aus Fig. 1 in der Draufsicht;

Fig. 3 ein Zahnreinigungskopf nach der Erfindung mit einem Kreuzkugelgelenk;

Fig. 4 einen Schnitt entlang der Linie AB in dem Träger für die Reinigungselemente des Zahnreinigungskopfes nach Fig. 1;

Fig. 5 einen Längsschnitt durch einen Bürstenkopf einer Zahnbürste;

Fig. 6A, 6B und 6C Ausführungsformen von Blattfedern und

Fig. 7 einen Längschnitt durch ein weiteres Ausführungsbeispiel des Zahnreinigungskopfes nach der Erfindung.

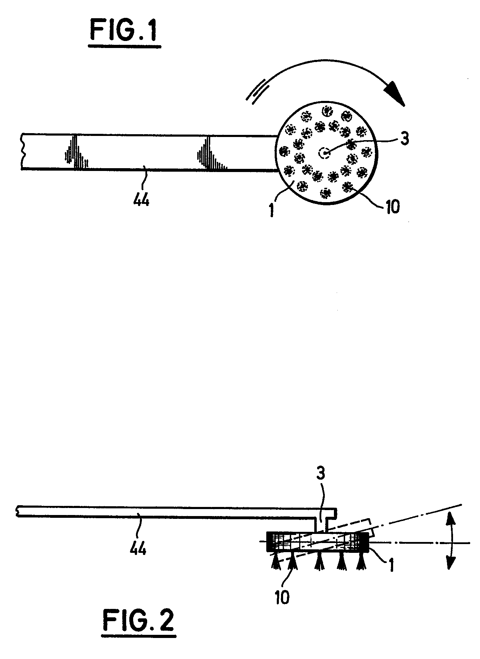

Von der in Fig. 1 dargestellten elektrischen Zahnbürste ist lediglich der vordere Teil des Bürstenstieles 44 wiedergegeben, an welchem der mit Zahnreinigungskopf 1 bezeichnete Bürstenkopf oder Kranzteller drehbar befestigt ist, wobei dessen Drehachse 3 radial zum Bürstenstiel 1 verläuft. Während jeder Phase der Bewegung befindet sich der Kranzteller 1 in ein und derselben tangential zur Umhüllung des Bürstenstieles 44 verlaufenden Ebene. Nach dem Einschalten des Antriebes wird über hier nicht eingezeichnete Kraftübertragungsmittel der Kranzteller 1 in Rotation versetzt. An seiner Oberfläche sind Reinigungselemente 10 z.B. Borsten in etwa senkrecht befestigt und zwar derart, daß ein Bereich um die Drehachse 3 ausgespart ist.

...

Die Benutzung der erfindungsgemäßen Zahnbürste erfolgt in der Weise, daß vor oder nach dem Anschalten des Antriebes der Kranzteller 1 über die Borsten 10 enventuell nach Aufbringen von Zahnpasta insbesondere im Bereich um die Drehachse 3, mit leichtem Druck an die Zähne und das Zahnfleisch angelegt und über den Bürstenstiel 44 hin- und herbewegt wird. Die Reinigung des Zahnfleischsaumes ist insbesondere dann gründlich, wenn die von den Borsten 10 beschriebenen Kreisbahnen einen mittleren Durchmesser vonca. 1,5 cm aufweisen, da in diesem Fall der Bewegungsablauf im wesentlichen entlang des Zahnfleischsaumes erfolgt. Für die Drehfrequenz wird als besonders günstiger Wert 2 - 15 Hz vorgeschlagen.

In Figur 2 ist dasselbe Ausführungsbeispiel in Draufsicht dargestellt. Der Kranzteller 1 ist auf der einen (unteren) Seite mit Borsten 10 besetzt und an seiner gegenüberliegenden Seite über eine Drehachse 3 mit dem Bürstenstiel 44 derart verbunden, daß ein Verschwenken des Kranztellers 1 in seiner Gesamtheit um eine Achse senkrecht zum Bürstenstiel 44 und zur Drehachse 3 möglich ist. Zur besseren Verdeutlichung wurde ein im ausgeschwenkten Zustand befindlicher Kranzteller 1 in gestrichelter Linienführung wiedergegeben. Für die Erfindung entscheidend ist, daß zum einen auch beim Verschwenken, also in jeder möglichen Position, eine Verbindung mit dem Antrieb der Zahnbürste gegeben ist und daß zum anderen die Schwenkbewegung durch ungleichmäßige Kraftausübung auf die Fläche des Kranztellers 1 hervorgerufen wird. Während der praktischen Anwendung ist es der Regelfall, daß der Kranzteller 1 teilweise auf einem Zahn anliegt, und einen Zwischenraum überdeckt, wodurch er eine unsymmetrische, also inhomogene, äußere Kraft erfährt, welche bewirkt, daß der Kranzteller 1 verschwenkt, und zwar derart, daß der im Bereich des Zahnes befindliche Teil auf den Bürstenstiel 44 zu und der andere Bereich demzufolge von

...

Braun Form 10.407/1-10/83

diesem weg bewegt wird. Das hat zur Folge, daß der Kranzteller 1 bzw. die darauf befindlichen Borsten 10 besser in die Zahnzwischenräume eindringen und diese reinigen können. Wird die soeben beschriebene Krafteinwirkung aufgehoben, kehrt der Kranzteller in seine Ausgangslage zurück.

Im Ergebnis erhält man eine elektrische Zahnbürste, die eine wesentlich gründlichere und vollständigere Reinigung der Zähne unter gleichzeitiger Vermeidung von Verletzungen des Zahnfleisches zuläßt.

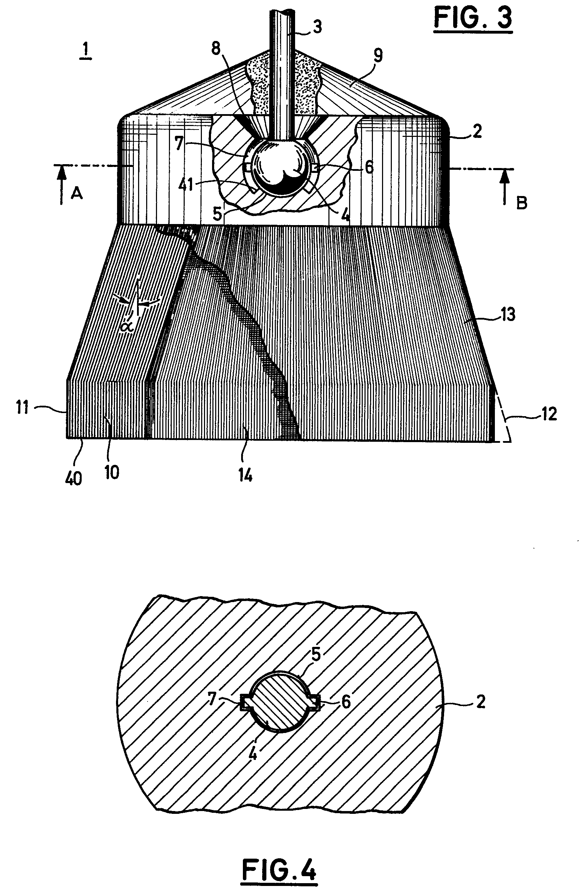

Fig. 3 zeigt ein Ausführungsbeispiel eines Zahnreinigungskopfes 1 einer Zahnbürste mit einer Gelenkvorrichtung, die ein Kreuzkugelgelenk aufweist. Das Kreuzkugelgelenk besteht aus einer Kugelschale 5, einem Kugelgelenk 4, Zapfen 6 und einer Ringnut 7. An dem Kugelgelenk 4 ist die Drehachse 3 ausgebildet, mit der der Zahnreinigungskopf 1 in Drehung versetzt wird. Die Kugelschale 5 ist in einen Träger 2, wie z.B. dem zuvorbeschriebenen Kranzteller 2 eingearbeitet, der wie in Fig. 3 dargestellt, Borsten 10 in Form eines Borstenkranzes trägt. Damit infolge der Drehung der Drehachse 3 das Kugelgelenk 4 nicht in der Kugelschale 5 durchdrehen kann, sind die einander gegenüberliegenden Zapfen 6 vorgesehen. Die Zapfen 6 gleiten in der Ringnut 7, weshalb bezogen auf die dargestellte Fig. 1 die Drehachse 3 Bewegungen nach links und rechts, sowie aus der Zeichenebene heraus und hinein ausführen kann. Die Gelenkvorrichtung kann im einfachsten Fall auch als Zapfengelenk ausgebildet sein, das einen Freiheitsgrad aufweist.

In Fig. 4 ist ein Schnitt durch den Träger 2 entlang der Schnittlinie AB dargestellt und den Fig. 3 und 4 ist zu entnehmen, daß die gezeigte Gelenkvorrichtung in die angeführten Richtungen be-

...

wegt werden kann. D.h., die Gelenkvorrichtung weist zwei Freiheitsgrade auf, wobei dennoch der Zahnreinigungskopf 1 mittels der Zapfen 6 in Drehung versetzt werden kann. Die Kraftübertragung erfolgt dabei von der Drehachse 3 auf die Zapfen 6, die wiederum die Kräfte auf die Seitenwände der Ringnuten 7 übertragen. An der Eintrittsstelle der Drehachse 3 in den Träger 2 ist ein Öffnungskegel 8 ausgespart, damit die Drehachse 3 in die beschriebenen Richtungen bewegt werden kann. Die Drehachse 3 ist dabei an jedem beliebigen Punkt innerhalb des Öffnungskegels 8 positionierbar, wenn die Zapfen 6 nicht vorher an der Begrenzungskante 41 anstoßen. Der in Fig. 3 gezeigte Zahnreinigungskopf 1 weist, wie zuvor beschrieben, vorzugsweise eine symmetrische kreisrunde Form auf und die Gelenkvorrichtung liegt auf der Symmetrieachse des Reinigungskopfes.

An der Unterseite des Trägers 2 sind die Borsten 10 in Form eines Borstenkranzes ausgebildet. Bezogen auf die Längsachse des Zahnreinigungskopfes 1 erstrecken sich die Borsten 10 unter einem Winkel $\alpha$ nach außen. Der Borstenkranz bildet so einen Mantel eines Kegelstumpfes. Vorzugsweise liegt der Winkel $\alpha$ in einem Bereich von 25 Grad. Am vorderen Bereich 11 des Borstenrandes verlaufen die Borsten ein kurzes Wegstück parallel zu der Längsachse des Zahnreinigungskopfes 1. Die Borsten 10 sind hier beispielsweise abgeschnitten oder nach dem Erwärmen umgeknickt und in die gezeigte Richtung ausgerichtet. Es ist aber auch möglich, den mit dem Bezugszeichen 12 bezeichneten spitzen Borstenrand (gestrichelt dargestellt) stehen zu lassen. Jedoch ergibt der im vorderen Borstenbereich geradlinig verlaufende Abschnitt den Vorteil, daß die äußersten Borsten nicht so leicht in das Zahnfleisch oder in die Zahnfleischtaschen gelangen können. Vorzugsweise liegt der Durchmesser der Reinigungsfläche 40 an den Borstenspitzen in dem Bereich von 15mm. D.h., die Krümmung der

...

Umlaufkante der Reinigungsfläche 40 liegt in dem Bereich der Krümmung des Zahnfleischsaumes. Weiter beträgt die Länge der Borsten 10 und der Durchmesser des Trägers 2 10mm. Im Inneren ist der Borstenkranz aus den Borsten 10 ausgespart, weshalb sich hier ein Hohlraum 14 ausbildet. Der Hohlraum 14 kann dazu dienen, Zahnpasta aufzunehmen oder ein oder mehrere Noppen aus elastischem Material aufzunehmen, die mit den Spitzen aus der Hohlraumöffnung ragen und zum Massieren des Zahnfleisches dienen. Die Noppen sind hierbei vorzugsweise etwas kürzer als die Länge der Borsten 10, weshalb die nicht gezeigten Noppen erst nach sanftem Druck auf den Reinigungskopf das Zahnfleisch etwas später als die Borsten 10 berühren. Statt der Borsten 10 können auch Reinigungselemente in Form von elastischen Materialien verwendet werden, in dem beispielsweise der Borstenkranz aus einem Kegelstumpfabschnitt aus Gummi besteht. Der Kegelstumpfabschnitt kann hierbei die gleichen Details aufweisen, wie sie im Zusammenhang mit den Borsten 10 beschrieben wurden.

Wird der Zahnreinigungskopf 1 mit der Reinigungsfläche 40 auf eine Zahnoberfläche aufgesetzt, dann paßt sich die Lage der Reinigungsfläche 40 infolge des Kreuzkugelgelenkes selbsttätig der Kontur der Zahnoberfläche an. Infolge der fortlaufenden Putzbewegung und der Anpassungsfähigkeit der Lage der Reinigungsfläche 40 an die Zahnoberflächenkontur wird ein großer Reinigungseffekt erzielt. Wird der Zahnreinigungskopf 1 bei den Putzbewegungen auf eine Zahnlücke zubewegt, dann bewirkt die Anpreßkraft, die wiederum über die Reinigungsfläche 40 auf die Zahnoberfläche übertragen wird, daß der Zahnreinigungskopf 1 in den Zahnzwischenraum kippt. D.h., die beidseitig zu dem Gelenk liegenden Reinigungsflächen 10 bilden mit dem Abstand zu der Symmetrieachse, auf der das Gelenk liegt, Hebelarme, die bei Belastung Drehmomente bewirken. Sind beide Kräfte rechts und links

...

0173150
BRAUN
Braun Aktiengesellschaft

05244-PT4/Wei
24.07.85

der Symmetrieachse gleich groß, dann rotiert der Zahnreinigungskopf 1 in waagrechter Lage. Entfällt hingegen auf der einen Seite die Kraft, wenn beispielsweise über einen Zahnzwischenraum gefahren wird, dann kippt der Reinigungskopf 1 soweit, bis die Borsten erneut anstoßen. Der Zahnreinigungskopf 1 gelangt so unter reinigenden Drehbewegungen mit den vorderen Putzflächenkanten in die tieferliegenden Zahnzwischenräume, wobei auch am Zahnhals kein Zahnoberflächenabschnitt übersprungen oder ausgelassen wird. Die Drehzahl des Reinigungskopfes 1 ist vorzugsweise variierbar und die Umdrehungsfrequenz liegt in dem Bereich von 1 bis 20 Hz. Ebenso ist es sinnvoll, die Drehrichtung des Reinigungskopfes 1 umschaltbar auszugestalten, um die Reinigungselemente gleichmäßig abzunutzen oder die Handhabung der Zahnbürste zu verbessern.

In Fig. 3 ist der Träger 2 an der Oberseite durch ein elastisches Material 9 abgedeckt. Das Material 9 weist eine so große Elastizität auf, daß es die Bewegungen in der Drehachse mit vollzieht. Das elastische Material 9 übernimmt somit einerseits die Funktion, das Gelenk vor Schmutzeinfall und Wassereintritt zu schützen. Andererseits weist das elastische Material Federeigenschaften auf, die bewirken, daß der Zahnreinigungskopf 1 in seine Grundposition zurückgedrückt wird, wenn die Reinigungselemente frei drehen und die Zahnoberfläche nicht berühren. Hierdurch führt der Zahnreinigungskopf keine unkontrollierten Bewegungen aus und der Benutzer kann die Lage der Reinigungsfläche 40 vor einem erneuten Ansetzen besser abschätzen.

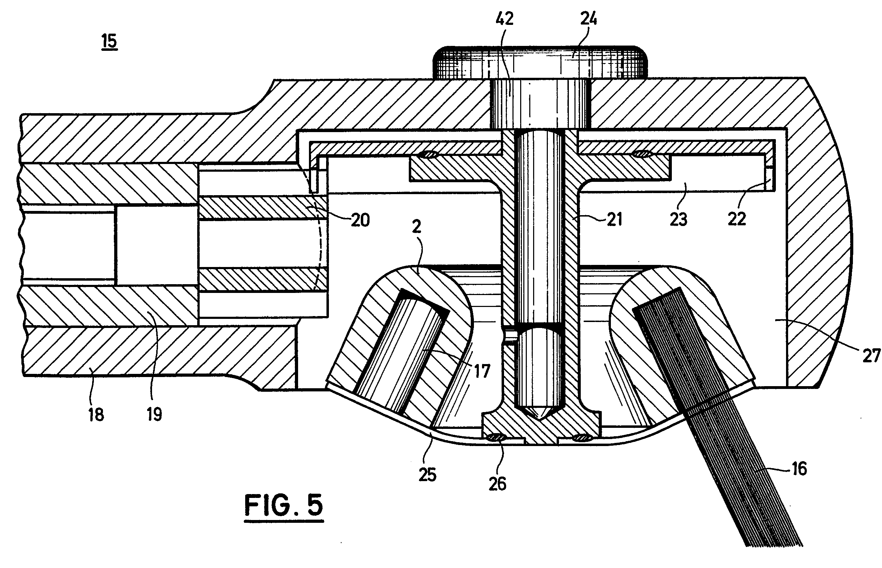

Fig. 5 zeigt einen Längsschnitt durch den vorderen Schaft 18 einer Zahnbürste 15. In dem Schaft 18 dreht in einer Bohrung eine Antriebswelle 19, die ein Antriebsrad 20 aufweist. Die Antriebswelle 19 wird durch einen nicht gezeigten Motor in dem Handgriff

...

der Zahnbürste 15 angetrieben. Die Längsachse der Zahnbürste 15 verläuft längs der Antriebswelle 19. Im vorderen Bereich des Schaftes ist eine Kammer 27 vorgesehen, in der senkrecht zu der Längsachse eine Welle 21 angeordnet ist. Die Welle 21 ist am hinteren Ende in einem Lager 42 drehbar und axial nicht verschiebbar gelagert. In Fig. 5 entspricht die Welle 21 der Drehwelle 3 aus Fig. 1, 2 und 3. Weiter weist die Welle 21 ein Zahnrad 23 mit einem Zahnkranz 22 auf, der mit dem Antriebsrad 20 in Eingriff steht. Sobald die Antriebswelle 19 durch den nicht gezeigten Motor gedreht wird, erfolgt die Kraftübertragung auf den Zahnkranz 22 des Zahnrades 23. Damit in das Lager 42 kein Schmutz oder Wasser eintreten kann, ist ein Verschluß 24 vorgesehen.

An dem vorderen freien Ende der Welle 21 ist ein Träger 2 für Borstenbüschel 16 vorgesehen. Der Träger 2 weist die Form eines Ringes auf, wobei die Bohrungen 17 zur Aufnahme der Borstenbüschel 16 unter einem geeigneten Winkel schräg nach außen gestellt sind. Die Verbindung des Trägers 2 zu der Welle 21 wird über eine in Fig. 5 nur im Schnitt dargestellte Blattfeder 25 bewirkt. Die Blattfeder 25 ist über Befestigungspunkte 26 am vorderen freien Ende der Welle 21 befestigt. Mit der Drehung der Welle 21 wird der Träger 2 mit den Borstenbüscheln 16 gedreht. Statt der Borstenbüschel 16 können gleichfalls Gumminoppen oder Gummistifte wie zuvor beschrieben vorgesehen sein. Ebenso ist es möglich, über die hohle Welle 21 eine Wasserzufuhr zu ermöglichen und es ist möglich in Quer- oder Längsrichtung des Schaftes mehrere Träger 2 vorzusehen, wobei zusätzliche Wellen 21 und Zahnräder 23 vorgesehen sind. Die nebeneinander angeordneten Träger 2 sind soweit voneinander beabstandet, daß sie sich beim Abkippen aus ihrer Grundarbeitsposition nicht gegenseitig mit den vorderen Borstenspitzen behindern.

...

In Fig. 5 ist die Grundarbeitsposition des Trägers 2 dargestellt. Wird wie zuvor beschrieben ein einseitiger Druck auf die Spitzen der Borstenbüschel 16 ausgeübt, verläßt der Träger 2 die in Fig. 5 gezeigte Lage. Der ringförmige Träger 2 ist in seinem Innendurchmesser an seiner Oberkante bzw. seinem freien Ende soweit ausgespart, daß genügend Raum zum Verschwenken vorhanden ist und die Innenseite des Trägers 2 die Welle 21 kaum berührt. Andererseits ist es aber möglich, den freien Abstand zwischen dem Träger 2 und der Welle 21 so zu bemessen, daß die Welle 21 als Anschlag und Begrenzung für die Kippbewegung dient.

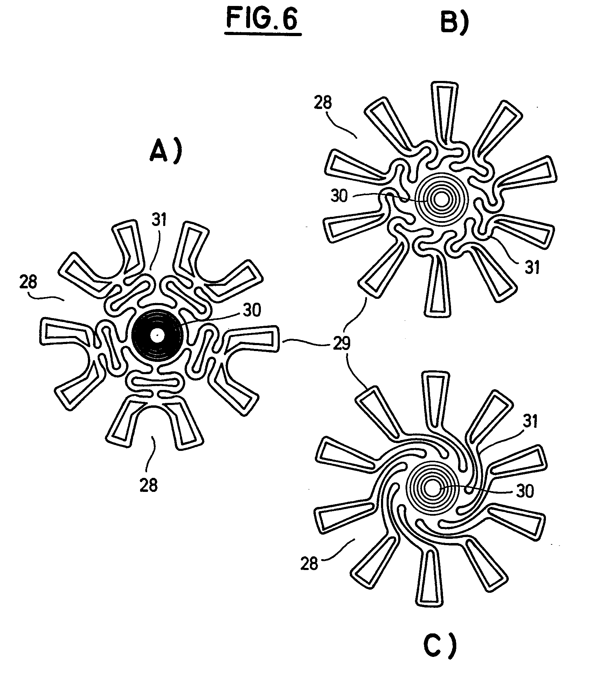

Die Fig. 6A, 6B und 6C zeigen verschiedene Ausführungsformen der Blattfeder 25 in der Draufsicht. Die Blattfedern 25 weisen äußere und sich radial erstreckender Haltestege 29 auf, die an der Unterseite des ringförmigen Trägers 2 aus Fig. 5 befestigt sind. Zum Durchtritt der Borstenbüschel 16 enthalten die Blattfedern 25 Aussparungen 28. Der Mittelabschnitt 30 der Blattfedern 25 wird mit den Befestigungspunkten 26 an dem freien Ende der Welle 21 befestigt, und die Mittelabschnitte 30 sind über Federabschnitte 31 mit den außen liegenden Haltestegen 29 verbunden. Die in Fig. 6 gezeigten Blattfedern 25 sind vollkommen plan und beispielsweise durch Ätzen oder Stanzen in die gezeigten Formen gebracht. Die Haltestege 29, die Federabschnitte 31 und die Mittelabschnitte 30 liegen somit in einer Ebene und damit die Mittelabschnitte 30 gegenüber den Haltestegen 29 in eine andere Ebene gebracht werden können, weisen die Federelemente 31 die in Fig. 6 gezeigten Formen auf. Durch die Überlänge, d.h., die Federelemente 31 sind länger als die kürzeste Verbindung eines Haltesteges 29 zu dem Mittelabschnitt 30, ist es möglich, die Haltestege 29 gegenüber der Ebene der Mittelabschnitte 30 nach oben oder nach unten zu kippen. Da die Haltestege 29 unabhängig von einander in die Federelemente 31 übergehen, ist es möglich,

...

einen Teil der Federlemente nach oben und die andere Hälfte nach unten in der Zeichnungsebene zu kippen. Vorzugsweise liegen immer zwei Haltestege 29 einander gegenüber, so daß ein Symmetrielinie ausgebildet wird, um die der Träger 2 verkippbar gelagert ist. Fig. 6A zeigt Federelemente in Form eines zusammengedrückten Rings. Weiter zeigt Fig. 6B Federabschnitte 31 in Form von Schlaufen und Fig. 6C in Form von wirbelförmig angeordneten Stegen.

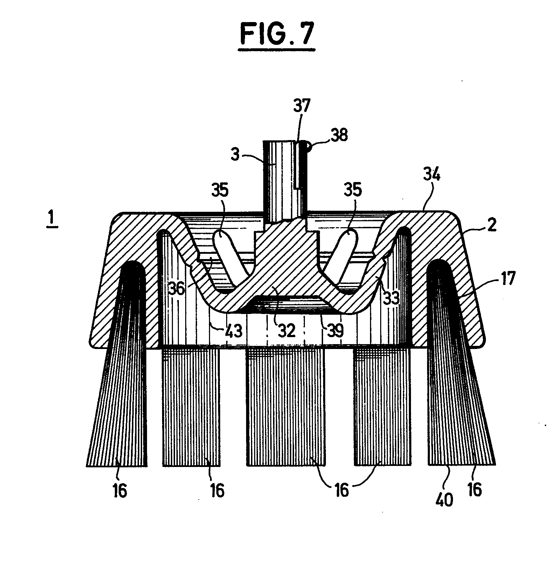

Fig. 7 zeigt ein weiteres Ausführungsbeispiel eines Zahnreinigungskopfes 1. Der Träger 2, der Borstenbüschel 16 aufnimmt, ist über Streben 33 mit einem Innenteller 32 verbunden. Die Streben 33 erstrecken sich radial von dem Teller 32 zu dem Innenrand des Trägers 2. Vorzugsweise sind wieder eine gerade Anzahl von Streben 33 vorgesehen, damit jeweils zwei einander gegenüberliegende Streben eine Drehachse bilden können, um die der Reinigungskopf kippen kann. Die Streben 33 sind gemäß der in Fig 7 gezeigten Schnittrichtung S-förmig gekrümmt und erstrecken sich mit Überlänge in das Innere des Trägers 2. Die S-Form ergibt sich durch den Übergang von dem Teller 32, an dem die Strebe 33 einen ersten Krümmungsabschnitt aufweist, bis zu dem zweiten Krümmungsabschnitt, der am oberen Rand des Trägers 2 ausgebildet ist. Durch den S-förmigen - oder konisch nach innen gerichteten Verlauf der Streben 33 sinkt der Teller 32 in das Innere des Hohlraums 43 des Trägers 2. Durch die Überlänge der Streben 33 und ihren Verlauf ist der Träger 2 um die Drehwelle 3 in einen bestimmten Winkelbereich aus seiner Grundarbeitsposition heraus verschwenk- oder kippbar. Die Streben 33 wirken hierbei gleichfalls als Federelemente, wenn sie beispielsweise zusammen mit dem Träger 2 aus einem einzigen Stück Kunststoff gespritzt sind. Die Streben 33 versuchen somit nach einem Verkippen des Trägers 2 ihre durch den Herstellungsvorgang gegebene Form wieder einzu-

...

BRAUN 0173150

Braun Aktiengesellschaft

05244-PT4/Wei
24.07.85

nehmen. Mittels der Größe und Breite der Schlitze 35 zwischen den Streben 33, sowie durch die Dicke der Streben 33 ist es möglich, die Federeigenschaften der Streben 33 zu variieren.

Gegebenenfalls ist es möglich, Sollbruchstellen 36 an den Streben 33 vorzusehen, damit bei einem Abreißen des Trägers 2 von dem Innenteller 32 keine scharfen Kanten auf das Zahnfleisch gerichtet sind. D.h., vorzugsweise liegen die Sollbruchstellen innerhalb der Kammer 27 (vgl. Fig. 5), wodurch eine Berührung der abgetrennten Strebenenden an dem Zahnfleisch nicht möglich ist. Der Teller 32 bietet auch den Vorteil, daß wegen den runden Vorderkanten keine Beschädigungen am Zahnfleisch herbeigeführt werden können. In der Mitte des Tellers 32 ist eine Vertiefung, beispielsweise für einen Gumminoppen vorgesehen. Weiter ist es wie die in den zuvor beschriebenen Fällen möglich, den Innenraum 43 vollständig mit einem gummielastischen Material auszufüllen, damit keine Zahnpasta durch die Schlitze 35 in die Kammer 27 (vgl. Fig. 5) tritt. Das Ausführungsbeispiel des Zahnreinigungskopfes 1 in Fig. 7 bietet ferner den Vorteil, daß die aus den Streben 33 gebildete Gelenkvorrichtung möglichst nahe an den Reinigungsflächen liegt. Hierdurch wird die Positionierbarkeit des Reinigungskopfes verbessert, was in der gleichen Weise auch in den zuvor beschriebenen Ausführungsbeispielen angestrebt wird.

Zur Befestigung des Zahnreinigungskopfes 1 aus Fig. 7 an der Welle 21, kann die Drehwelle 3 beispielsweise viereckig zum verdrehsicheren Befestigen ausgebildet sein und in eine entsprechende Bohrung in dem Hohlraum der Welle 21 eingesteckt werden. Zum Einrasten ist ein Vorsprung 38 vorgesehen, wobei der Vorsprung 38 durch einen Einschnitt 37 in der Drehwelle 3 nachgiebig gelagert ist. Der Reinigungskopf 1 kann so auf die Welle 3 ge-

...

BRAUN                    0173150
Braun Aktiengesellschaft

05244-PT4/Wei
24.07.85

steckt und im Bedarfsfall ausgetauscht werden. Abweichend von allen zuvor beschriebenen Gelenkvorrichtungen, die zwischen der Drehwelle 3 und dem Träger 2 ausgebildet sind, ist es gleichfalls möglich, den Träger 2 starr auf der Welle 21 zu befestigen und die Gelenkvorrichtung anstelle des Lagers 42 vorzusehen. Ebenso ist es möglich, die Gelenkvorrichtung in der Mitte der Welle 21 auszubilden.

In Fig. 7 sind die radial an dem Innenteller 32 angeordneten Streben 33 längs der Symmetrieachse bzw. der Drehachse 3 gekrümmt. Hierdurch wird der Innenteller 32 in Längsrichtung nach unten in den Innenraum 43 des Trägers 2 versetzt angeordnet, wobei in anderen Ausführungsbeispielen der Teller 32 auch nach oben außerhalb des Trägers 2 angeordnet werden kann. D.h., der Befestigungspunkt der Streben 33 an der Drehachse 3 liegt näher an den Reinigungselementen 10 als der Befestigungspunkt des anderen Ende der Streben 33 an dem Träger 2. In einer Abwandlung dieser Ausführungsform ist es möglich, beispielsweise den Teller 32 mit dem inneren Rand des Trägers 2 so zu verbinden, daß die Krümmungen der radialen Streben 33 ähnlich den Federelementen 31 (vgl.Fig. 6) nur in der Draufsicht auf den Reinigungskopf 1 zu erkennen sind, wobei alle Streben 33 in einer Ebene liegen, auf der die Drehachse 3 senkrecht steht. In Fig. 7 ist die Krümmung der Streben 33 nur in der gezeigten Schrittrichtung zu erkennen. Gegebenenfalls ist es auch möglich Streben 33 vorzusehen, deren Krümmungen Kombinationen aus den in den Fig. 6 und 7 gezeigten Möglichkeiten sind. Hierbei sind beispielsweise die in Fig. 7 gezeigten Streben 33 zusätzlich seitlich verkrümmt

Durch die Anordnung des Dreh- oder Kippunktes des Borstenkopfes 1 längs der Richtung der Drehachse 3 ist es möglich, den Kipp- oder Schwenkkreis des Borstenkopfes 1 zu variieren. Den Streben 33

...

Braun Form 10.407/1-10/83

entspricht hierbei der Radius des Kipp oder Schwenkkreises. Der Abstand zwischen der Drehachse 3 und der Reinigungsfläche 40, der dem Hebelarm entspricht, ist hierbei nicht gleich dem Radius, um der Borstenkopf 1 verschwenkt wird.

Weiter ergibt sich durch das Anordnen des Dreh oder Kippunktes zwischen dem Träger 2 und der Reinigungsfläche 40 der Vorteil, daß ein Gewichtsausgleich zwischen dem Gewicht des Trägers 2 und den Borsten 16 bewirkt werden kann. Der Dreh oder Kippunkt liegt deshalb vorzugsweise im Schwerpunkt des Borstenkopfes 1, um bei der Rotation Unwuchten zu vermeiden. Der freirotierende Borstenkopf 1 behält so auch in waagrechter Lage der Drehachse 3 und besonders bei hohen Drehzahlen seine Grundarbeitsposition bei.

Statt der in Fig. 7 gezeigten Streben 33 ist es weiter möglich ein elastisches Material vorzusehen, das den Träger 2 mit der Drehachse 3 verbindet. Das elastische Material übernimmt hierbei die Gelenk und Federelementfunktion. Beispielsweise erfolgt die Herstellung eines derartigen Borstenkopftes 1 über ein Zweikomponenten - Sritzgußverfahren, wobei im ersten Arbeitsgang z.B. ein ringförmiger Träger 2 und die Drehachse 3 gefertigt wird und im zweiten Arbeitsgang das elastische Material eingespritzt wird. Damit das elastische Material besser an dem Träger 2 haftet, sind geeignete Hinterschneidungen, Kanten oder oberflächenver-größernde Teile vorgesehen.

Die Erfindung ist nicht auf die obigen Ausführungsbeispiele beschränkt, sondern läßt auch weitere in ihrem Rahmen liegende Ausführungsformen zu. Insbesondere hat es sich für verschiedene Anwendungsfälle als vorteilhaft erwiesen, die Schwenk- und/oder Kippbewegung des Bürstenkopfes 1 mittels einer biegbaren bzw. flexiblen Drehachse 3 zu ermöglichen. Durch diese Maßnahme lassen sich die Gelenkkonstruktionen der anderen Ausführungsbeispiele umgehen und Vorteile bei den Herstellungskosten erzielen. Bei

...

BRAUN

Braun Aktiengesellschaft

05244-PT4/Wei
24.07.85

0173150

diesen Ausführungsformen bietet sich insbesondere eine einstückige Ausbildung der Drehachse 3 und des Trägers 2 mittels Spritzgußverfahren oder ähnlichem an. Alle nicht die Ausgestaltung der Gelenkvorrichtungen 4, 25, 33 betreffenden, in dieser Schrift offenbarten Ausführungsformen der erfindungsgeäßen Zahnbürste dienen ebenfalls der vorteilhaften Weiterbildung einer Zahnbürste mit flexibler bzw. biegbarer Drehachse 3.

...

- 20 -

Patentansprüche

1. Elektrische Zahnbürste mit einem Griff, in dessen Inneren ein Antrieb untergebracht ist, an dem ein Bürstenstiel mit einem Bürstenkopf ausgebildet ist, der in einem Träger befestigte Reinigungselemente aufweist, wobei der Bürstenkopf um eine Drehachse rotiert, gekennzeichnet durch einen schwenk- oder kippbar gelagerten Bürstenkopf (1).

2. Zahnbürste nach Anspruch 1, dadurch gekennzeichnet, daß eine Gelenkvorrichtung (4, 25, 33) vorgesehen ist, die zwischen dem Bürstenstiel (44) und der Drehachse (3) ausgebildet ist.

3. Zahnbürste nach Anspruch 1, dadurch gekennzeichnet, daß eine Gelenkvorrichtung (4, 25, 33) vorgesehen ist, die zwischen der Drehachse (3) und dem Bürstenkopf (1) ausgebildet ist.

4. Zahnbürste nach Anspruch 1-3, dadurch gekennzeichnet, daß die Gelenkvorrichtung (4, 25, 33) ein Kreuzkugelgelenk ist , das aus einem Kugelgelenk (4), einer Kugelschale (5), Zapfen (6) und einer Ringnut (7) besteht.

5. Zahnbürste nach Anspruch 1-3, dadurch gekennzeichnet, daß die Gelenkvorrichtung (4, 25, 33) längs des Bürstenkopfes (1) zwischem dem Träger (2) und dem freien Ende der Reinigungselemente (10) angeordnet ist.

6. Zahnbürste nach Anspruch 1-3, dadurch gekennzeichnet, daß die Gelenkvorrichtung (4, 25, 33) ein Federelement (9, 25, 33) aufweist, das den Bürstenkopf (1) in eine Grundposition zurückstellt.

...

BRAUN

Braun Aktiengesellschaft

05244-PT4/Wei
24.07.85

7. Zahnbürste nach Anspruch 6, dadurch gekennzeichnet, daß die Gelenkvorrichtung eine Blattfeder (25) ist.

8. Zahnbürste nach Anspruch 7, dadurch gekennzeichnet, daß die Blattfeder (25) radiale Haltestege (29), Aussparungen (28) zum Durchtritt der Reinigungselemmente (10) und einen Mittelabschnitt (30) aufweist, der über Federabschnitte (31) mit den Haltestegen (29) verbunden ist.

9. Zahnbürste nach Anspruch 6, dadurch gekennzeichnet, daß die Gelenkvorrichtung aus gekrümmten Streben (33) besteht, die federelastische Eigenschaften aufweisen und die sich radial von der Drehachse (3) erstrecken.

10. Zahnbürste nach Anspruch 9, dadurch gekennzeichnet, daß die Streben (33) eine Sollbruchstelle (36) aufweisen.

11. Zahnbürste nach Anspruch 9, dadurch gekennzeichnet, daß die Drehachse (3), die Streben (33) und ein Träger (2) der Reinigungselemente (10) bzw. ein Zahnrad (23) aus einem Stück Kunststoffmaterial gespritzt sind.

12. Zahnbürste nach Anspruch 6, dadurch gekennzeichnet, daß das Federelement (9) aus einem gummielastischen Material, vorzugsweise Silikon, besteht.

13. Zahnbürste nach Anspruch 8, dadurch gekennzeichnet, daß die Reinigungselemente (10) am vorderen Rand (11) einen Durchmesser im Bereich von 15mm aufweisen.

14. Zahnbürste nach Anspruch 8, dadurch gekennzeichnet, daß sich die Reinigungselemente (10) unter einem Winkel im Bereich von 25° nach außen erstrecken.

...

BRAUN 0173150
Braun Aktiengesellschaft

05244-PT4/Wei
24.07.85

15. Zahnbürste nach Anspruch 1, dadurch gekennzeichnet, daß die Reinigungselemente (10) eine Länge im Bereich von 10mm aufweisen.

16. Zahnbürste nach Anspruch 1, dadurch gekennzeichnet, daß die Reinigungselemente (10) am vorderen Rand (11) parallel zur Längsachse des Zahnreinigungskopfes (1) verlaufen.

17. Zahnbürste nach Anspruch 13, dadurch gekennzeichnet, daß die Reinigungselemente (10) aus einem gummielastischen Kegelstumpfkörper bestehen.

18. Zahnbürste nach Anspruch 17, dadurch gekennzeichnet, daß der Kegelstumpfkörper in der Mitte einen Hohlraum (14) zur Aufnahme von Zahnpasta aufweist.

19. Zahnbürste nach Anspruch 1, dadurch gekennzeichnet, daß der Kippwinkel, den die Gelenkvorrichtung zuläßt, im Bereich von 30° liegt.

20. Zahnbürste nach Anspruch 1, dadurch gekennzeichnet, daß die Umdrehungsfrequenz des Zahnreinigungskopfes (1) im Bereich von 1 - 20 Hz liegt und variierbar ist.

21. Zahnbürste nach Anspruch 5, dadurch gekennzeichnet, daß die Gelenkvorrichtung (4, 25, 33) im Schwerpunkt längs der Symmetrieachse des Bürstenkopfes (1) angeordnet ist.

22. Zahnbürste nach Anspruch 1-3, dadurch gekennzeichnet, daß die Gelenkvorrichtung (4, 25, 33) aus einem elastischen Material besteht, das zwischen dem Träger (2) und der Drehachse (3) ausgebildet ist.

...

23. Zahnbürste nach einem der Ansprüche 1 bis 22, <u>gekennzeichnet durch</u> einen durch die Einwirkung von äußeren Drehmomenten schwenk- und/oder kippbaren Bürstenkopf (1).

24. Zahnbürste nach einem der Ansprüche 1, 23, <u>gekennzeichnet durch</u> eine biegbare bzw. flexible Drehachse (3).

25. Zahnbürste nach Anspruch 24, <u>gekennzeichnet durch</u> eine einstückige Ausbildung der Drehachse (3) und des Trägers (2).

26. Zahnbürste nach einem der Ansprüche 1 bis 25, <u>dadurch gekennzeichnet,</u> daß die Drehachse (3) ohne Einwirkung äußerer Drehmomente einen im wesentlichen rechten Winkel zur Achse des Bürstenstiels (44) einnimmt.

...

1/5

## FIG.1

## FIG.2

0173150

## FIG. 3

## FIG.4

15

42 24

20

2

21 23 22

17

27

18 19

25 26

16

**FIG. 5**

5/5

0173150

# FIG.6

B)

A)

## FIG.7